(19) Europäisches Patentamt
European Patent Office
Office européen des brevets

(11) Publication number: 0 156 226
A2

# (12) EUROPEAN PATENT APPLICATION

(21) Application number: 85102733.4

(22) Date of filing: 11.03.85

(51) Int. Cl.[4]: B 01 J 23/90

(30) Priority: 12.03.84 JP 46699/84

(43) Date of publication of application:
02.10.85 Bulletin 85/40

(84) Designated Contracting States:
DE GB NL

(71) Applicant: NIPPON OIL CO. LTD.
3-12, 1-chome Nishi Shimbashi
Minato-ku Tokyo(JP)

(72) Inventor: Takase, Shinji
4-37-21, Baba Tsurumi-ku
Yokohama-shi Kanagawa-ken(JP)

(72) Inventor: Inoue, Akira
203, Kizukidaimachi Nakahara-ku
Kawasaki-shi Kanagawa-ken(JP)

(72) Inventor: Kawakatsu, Ken
203, Kizukidaimachi Nakahara-ku
Kawasaki-shi Kanagawa-ken(JP)

(72) Inventor: Ino, Takashi
2-228, Kosugicho Nakahara-ku
Kawasaki-shi Kanagawa-ken(JP)

(72) Inventor: Miyajima, Nobuyuki
203, Kizukidaimachi Nakahara-ku
Kawasaki-shi Kanagawa-ken(JP)

(74) Representative: Brown, John David et al,
FORRESTER & BOEHMERT Widenmayerstrasse 4/I
D-8000 München 22(DE)

## (54) Regeneration of spent hydrotreating catalysts.

(57) The present invention is related to a method to regenerate spent catalysts of hydrotreating processes for heavy hydrocarbon oils when the catalystic activity is reduced as a result of accumulation of such heavy metals as vanadium and nickel, characteristic of selective extraction and elimination of the said vanadium by immersing the catalysts in alcohol at the temperature range of 0 – 200°C for 5 – 1,000 hours after removing coke accumulated thereon by burning at the temperature of 400 – 600°C in an atmosphere of molecular oxygen-containing gas.



Croydon Printing Company Ltd.

0156226

# SPECIFICATIONS

1. Title of the Invention

Regeneration of spent hydrotreating catalysts

2. Background of the Invention

1) Field of the Invention

The present invention refers to the method to regenerate catalysts employed in hydrotreating processes of heavy hydrocarbon oils through hydrodesulfurization, hydrodenitrogenation, hydrodemetalization, and hydrocracking. To describe it in detail, the present invention is related to the method to selectively eliminate vanadium from used, catalysts whose activity has been degraded due to accumulated coke and such heavy metals as vanadium and nickel.

2) Description of the Prior Art

In recent years, it has been required to lower sulfur contents of heavy oils to prevent atmospheric pollution. As a result, hydrodesulfurization has been adopted as an effective method for heavy oils. When effecting hydrotreating of heavy hydrocarbon oils such as crude oil, residual oil from atmospheric or vacuum distillation, tar sand bitumen, deasphalted oil,

it is usual to employ those catalysts in which porous carriers including alumina and silica alumina carry such metals as molybdenum, cobalt, and nickel. If effecting hydrotreating of heavy oils by means of such catalysts, those heavy metals as vanadium, nickel, iron, and copper which are contained in heavy oils are to be accumulated on them, thereby degrading the catalytic activity. Especially, vanadium tends to highly concentrate on external surfaces of the catalysts and plug the openings of catalyst pores, thus seriously affecting the degradation of the catalystic activity.

Unlike catalyst poison caused by coke, that by accumulated heavy metals cannot be removed by such catalyst regenerating methods as burning one which is usually employed, thereby being eternal poison. Therefore, when the catalystic activity is reduced to a preset level or lower in the hydrotreating processes of heavy oils, such catalysts are to be replaced with a new ones. However, these spent catalysts contain many of such valuable metals as vanadium and nickel in addition to molybdenum and cobalt which are useful as catalyst components. Should such metals be discarded without collecting them, both economic loss and possibilities of environmental pollution will result.

hydrocracking of heavy hydrocarbon oils such as crude oil, residual oil from atmospheric or vacuum distillation process, tar sand bitumen, and deasphalted oil. The said catalysts are composed of porous carriers made of alumina or silica alumina to carry metals selected from Group VIA and VIII of the periodic table, such as Mo-Co, Mo-Ni, and Mo-Ni-Co.

In the present invention spent hydrotreating catalysts are, first of all, heated in an atmosphere of molecular oxygen containing gas so that coke may be eliminated and metals (such as vanadium and nickel) accumulated thereon may be oxidized at the same time.

Metals contained in or accumulated on used hydrotreating catalysts are usually in the form of sulfide or oxysulfide. After burning are effected to eliminate coke accumulated on them, such metals are converted into such metallic oxides as $MoO_3$, CoO, NiO, and $V_2O_5$.

The burning temperature should be 400-600°C, or preferably 450 - 550°C, and the burning time should be 3 - 200 hours, or preferably 5 - 100 hours. Should the burning temperature be less than 400°C, regenerating effect will be insufficient while 600°C or more is undesirable because catalysts may be sintered. Gases to be used for burning include gases containing molecular oxygen, such as molecular

oxygen gas, air, or oxygen-rich air. Then, the catalysts on which vanadium, nickel, and other metals have been oxidized by burning are immersed in alcohol to selectively extract vanadium.

Among other metallic oxides, it is known that vanadium pentoxide reacts with alcohol into vanadic ester. For example, butyl alcohol Class 3 and vanadium pentoxide react in the following manner to produce ester:

$$V_2O_5 + 6C_4H_9OH = 2(C_4H_9)_3VO_4 + 3H_2O$$

(W. Prandtl, L. Hess, Z. Anorg. Allgem Chem. 82, 103(1913))

The ester thus produced is soluble in alcohol but it can be easily separated through distillation because it has an extremely high boiling point when compared with its starting substance, alcohol (128 - 130°C at 20 Torr for the vanadic ester produced out of the said butyl alcohol Class 3). In addition, ester thus separated may be dissolved into vanadium pentoxide and alcohol since reverse reaction for the esterification advances by hydrolyzing the ester. The extracting temperature ranges from 0 to 200°C, or preferably from 50 to 190°C. Any temperatures below 0°C do not display the effect of the present invention fully because the extracting speed is too slow. Should the extracting temperature

exceed 200°C, vanadium pentoxide is reduced by alcohol, thereby producing vanadium tetraoxide which is inactive for esterification to the disadvantage of the invention.

The extracting time should range from 5 to 1,000 hours, or preferably from 10 to 200 hours. The volume of alcohol is no critical; alcohol whose volume is sufficient for extracting vanadium will do. Normally, it should be 10 - 500 times (in weight) the spent catalysts to be treated.

The alcohol to be used in the present invention is liquid under the working conditions, is an organic compound in which hydrogen atoms of hydrocarbon are substituted with hydroxyl group, is monohydric or polyhydric with the number of carbons of 1 - 20 or preferably 1 - 4. Such alcohols include, for instance, methanol, ethanol, n-propanol, isopropanol, n-butanol, sec-butanol, tert-butanol, isobutanol, ethylene glycol, glycerol, and pentanol. The purity of the alcohol does not matter, but industrially available ones should be used.

[Effect of the Invention]

As described above, the present invention will extremely simplify the separating/collecting processes when compared with conventionally known metal-extracting methods.

[Typical application examples of the Invention]

Typical application examples of the present invention are described as follows:

Example 1

After a cobalt-molybdenum-alumina catalyst containing 15.0 wt% of $MoO_3$ and 5.0 wt% of Co which was filled in a microreactor was presulfided, it was used for desulfurization of Khafji residual oil from atmospheric distillation process (V 69 ppm, Ni 19 ppm, and S 4.0 wt%) at a temperature of 400°C and the hydrogen pressure of 140 kg/$cm^2$ for 2,000 hours. After the run was terminated, the catalyst was washed with light oil and taken out from the reactor. Then, it was air-burnt at 500°C for 30 hours in a rotary kiln to remove coke accumulated on the catalyst (hereinafter called burnt catalyst). The chemically analyzed values of metals contained in the burnt catalyst are shown as follows:

| | |
|---|---|
| Mo | 8.3 wt% |
| Co | 3.3 wt% |
| V | 7.9 wt% |
| Ni | 2.2 wt% |
| Fe | 0.5 wt% |

10 g of the said burnt catalyst was placed in an Erlenmeyer flask of 2 liters provided with a circulator together with 1,000 cc of isopropyl alcohol and was kept in a water bath at 90° for

20 hours. The results of the chemical analyses of the said catalyst taken out of the flask are shown below. They indicate that vanadium was selectively extracted.

| | |
|---|---|
| Mo | 9.2 wt% |
| Co | 3.6 wt% |
| V | 1.7 wt% |
| Ni | 2.2 wt% |
| Fe | 0.6 wt% |

In the next, a regenerated catalyst, a burnt catalyst before regeneration, and a fresh catalyst were placed in a microreactor, respectively. After subjected to presulfiding, they were applied to desulfurization of Khafji residual oil from atmospheric distillation process at 400°C and the hydrogen pressure of 140 $kg/cm^2$. The desulfurization activities under the same conditions are, respectively, as follows:

| | Sulfur removal % | | |
|---|---|---|---|
| | 7.5 h later | 15 h later | 30 h later |
| Fresh catalyst | 87 | 83 | 79 |
| Burnt catalyst | 70 | 66 | 60 |
| Regenerated catalyst | 85 | 80 | 75 |

As the above-mentioned results clearly indicate, the

| | Sulfur removal % | | |
|---|---|---|---|
| | 7.5 h later | 15 h later | 30 h later |
| Fresh catalyst | 87 | 83 | 79 |
| Regenerated catalyst | 86 | 81 | 77 |

It is understood from the aforementioned results that the desulfurization activities of the regenerated catalyst were similar to those of the fresh one and that alcohol extraction effectively regenerated the catalyst.

The features disclosed in the foregoing description, in the following claims and/or in the accompanying drawings may, both separately and in any combination thereof, be material for realising the invention in diverse forms thereof.

0156226

CLAIMS

1. A method of regenerating a spent catalyst for hydrogenating hydro-carbon oils, the catalytic activity of which has been reduced as a result of accumulation of heavy metal(s), which method comprises removing coke accumulated on the catalyst by burning at a temperature of 400 to 600°C in an atmosphere containing molecular oxygen and then selectively extracting and eliminating the said heavy metal(s) by immersing the catalyst in an alcohol at a temperature of 0 to 200°C for 5 to 1,000 hours.

2. A method according to Claim 1, wherein the burning temperature is 450 to 550°C.

3. A method according to Claim 1 or 2, wherein the extracting temperature is 50 to 190°C.

4. A method according to any one of the preceding claims, wherein the extracting time is 10 to 200 hours.

5. A method according to any one of the preceding claims, wherein the alcohol is a monohydric or polyhydric alcohol having between 1 and 20 carabon atoms.

6. A method according to Claim 5, wherein the alcohol has between 1 and 4 carbon atoms.

7. A method according to any one of the preceding claims, wherein the heavy metal(s) belong(s) to group VA, group VIA and/or group VIII of the periodic table.

8. A method according to Claim 7, wherein the heavy metal(s) comprise(s) vanadium and/or nickel.